# EUROPÄISCHE PATENTSCHRIFT

(11) **EP 3 033 241 B1**
(45) Veröffentlichungstag und Bekanntmachung des Hinweises auf die Patenterteilung: **02.10.2019**
(21) Anmeldenummer: 14750207.4
(22) Anmeldetag: 07.08.2014
(51) Int. Cl.: B60J 5/04

(54) **ABKANTUNG EINES BLECHES, VORZUGSWEISE IM OPTISCH RELEVANTEN AUSSENBEREICH EINES FAHRZEUGES**
BEVELLING OF A SHEET, PREFERABLY IN THE VISUALLY RELEVANT EXTERIOR OF A VEHICLE
REPLIAGE D'UNE TÔLE, DE PRÉFÉRENCE DANS LA ZONE EXTÉRIEURE OPTIQUEMENT PERTINENTE D'UN VÉHICULE

(30) Priorität: 12.08.2013 DE 102013215916
(43) Veröffentlichungstag der Anmeldung: 22.06.2016
(73) Patentinhaber: Bayerische Motoren Werke Aktiengesellschaft, 80809 München (DE)
(72) Erfinder: FISCHER, Burkhard, 80939 München (DE)
(86) Internationale Anmeldenummer: PCT/EP2014/067028
(87) Internationale Veröffentlichungsnummer: WO 2015/022261

(56) Entgegenhaltungen:
- DE-C1- 10 012 274
- JP-A- 2011 062 738

## Beschreibung

Die Erfindung betrifft eine Abkantung eines Bleches im optisch relevanten Außenbereich eines Fahrzeuges.

Abkantungen eines Bleches im optisch relevanten Außenbereich eines Fahrzeuges erfolgen üblicherweise mittels eines Radius, beispielsweise in einer Größenordnung von 2-3 mm. Das abgekantete Blech liegt in der Regel in dem beweglichen Bereich von z. B. Türen, Klappen usw. Der Radius, unter dem die Abkantung erfolgt, muss dabei so groß sein, dass die jeweils bewegbare Kante einer Tür, Klappe o. dgl. unter Toleranzen kollisionsfrei zu den feststehenden Teilen bewegt werden kann. Dies kann zu Radien führen, die das optische Erscheinungsbild negativ beeinflussen, Denn der optische Eindruck einer Fuge wird zum einen durch die Fugenbreite und zum anderen durch die Abkantradien der beteiligten Bauteile bestimmt. Eine Verringerung der Fugenbreite oder der Abkantradien könnte den optischen Eindruck zwar verbessern, hätte aber negative Auswirkungen auf eine kollisionsfreie Bewegung der beteiligten Teile. Denn um eine kollisionsfreie Bewegung auch weiterhin zu ermöglichen, müsste daher bei kleineren Radien die Fugenbreite zwischen bewegtem und feststehendem Teil vergrößert werden, was aber wiederum zu einem verschlechterten Erscheinungsbild führen würde.

Aus der JP 2011062738 A ist ein gattungsgemäßes Verfahren zum Biegen eines Metallbleches bekannt. Durch eine Walzvorrichtung werden zwei bogenförmige Abschnitte erzeugt, die durch eine Abflachung im dazwischenliegenden Bereich beabstandet sind.

Aus der DE 10012274 C1 ist ein gattungsgemäßes Verfahren zum Herstellen von Abkantungen an einem Randbereich eines Bleches eines Kraftfahrzeuges bekannt.

Es ist daher Aufgabe der vorliegenden Erfindung, eine Abkantung bereit zu stellen, welche die Trennstelle zwischen bewegten und feststehenden Teilen optisch schmaler wirken lässt und damit ein höherwertiges Erscheinungsbild des gesamten Fahrzeuges vermittelt.

Diese Aufgabe wird erfindungsgemäß dadurch gelöst, dass die Abkantung eines Bleches im optisch relevanten Außenbereich eines Fahrzeuges, in Form einer glatten, harmonischen, zusammengesetzten mathematischen Kurve dritten Grades (Spline bzw. Polynomzug) ausgeführt ist.

Infolge der erfindungsgemäßen Ausgestaltung der Abkantung als Spline oder Polynomzug wird eine optische Wirkung erzielt, welche einerseits die Trennstelle zwischen bewegten und feststehenden Teilen optisch schmaler wirken lässt und andererseits ein höherwertiges Erscheinungsbild des gesamten Fahrzeuges vermittelt.

Die Unteransprüche beinhalten vorteilhafte Weiterbildungen und Ausgestaltungen der Erfindung.

Gemäß einer bevorzugten Ausgestaltung setzt sich die Kurve dritten Grades bzw. die Abkantung aus zwei bogenförmigen Abschnitten und einer Abflachung im dazwischenliegenden Bereich zusammen.

Die Radien der bogenförmigen Abschnitte können vorteilhafterweise gleich oder auch unterschiedlich groß sein.

Gemäß einer vorteilhaften Weiterbildung weist die Abflachung im dazwischenliegenden Bereich einen Radius auf, der größer ist als der Radius der bogenförmigen Abschnitte.

Alternativ kann die Abflachung im dazwischenliegenden Bereich auch als ebene Fase ausgebildet sein.

In bevorzugter Ausgestaltung liegt der Radius des bogenförmigen Abschnitts im niedrigen einstelligen Millimeterbereich und beträgt vorzugsweise 1,5 mm. Er ist damit deutlich kleiner als bei herkömmlichen Abkantungen, wo er im Bereich von 2-3 mm liegt.

Weitere Einzelheiten, Merkmale und Vorteile der Erfindung ergeben sich aus der nachfolgenden Beschreibung anhand der Zeichnungen. Es zeigen:

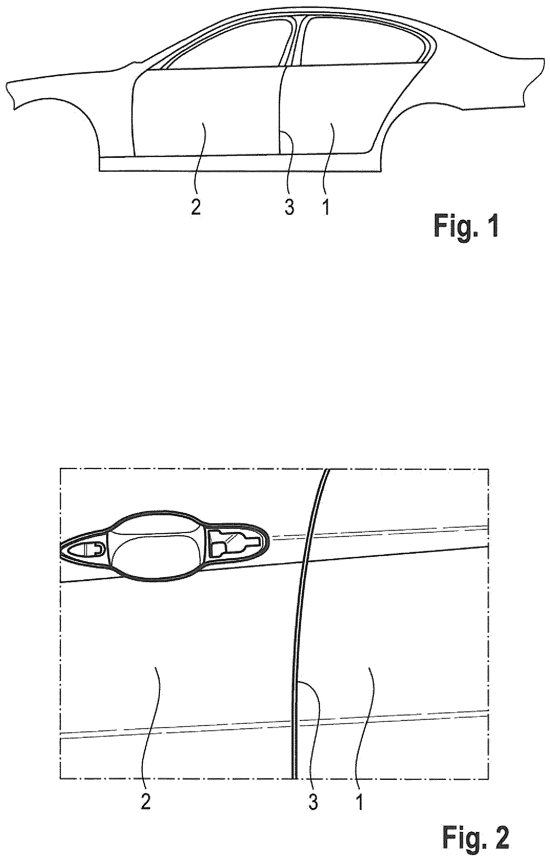

- Figur 1: eine Seitenansicht eines Fahrzeugs,
- Figur 2: eine schematische Darstellung einer Tür eines Fahrzeuges,
- Figur 3: eine Schnittdarstellung im Bereich zwischen zwei Türen des Fahrzeugs, und
- Figur 4: eine vergrößerte Darstellung der Einzelheit X aus Figur 2.

In den Figuren ist die Erfindung beispielshaft im Bereich einer Tür 1 eines Fahrzeuges, die an ein Fahrzeugteil oder eine andere Tür 2 angrenzt, dargestellt. Die beschriebene Ausgestaltung kann jedoch auch an einem anderen beweg- oder verschwenkbaren Fahrzeugteil, wie einer Klappe o. dgl. vorgesehen sein.

Die Tür 1 ist mit einem Türscharnier 1a versehen und um eine Achse derart 1b verschwenkbar, dass sich die Tür 1 auf einem Drehkreis 1c bewegt.

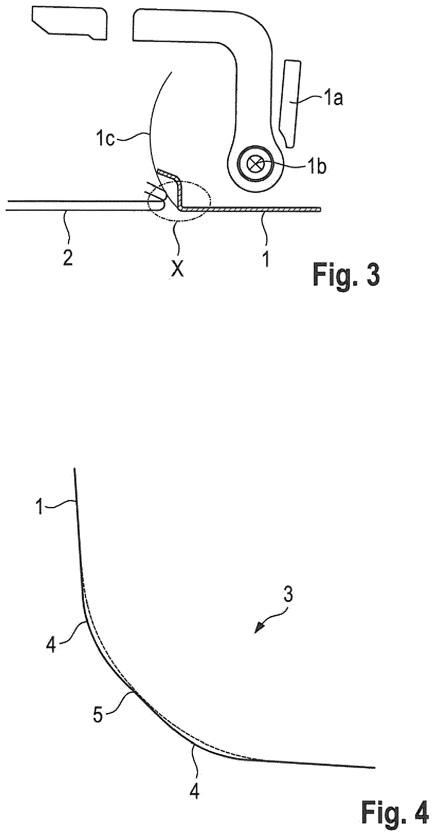

Das Blech der Tür 1 ist an seiner zu einem feststehenden Fahrzeugteil bzw. einer anderen Tür 2 weisenden Kante mit einer Abkantung 3 versehen, welche erfindungsgemäß die in Figur 4 gezeigt Form aufweist.

Die Abkantung 3 ist nicht mehr - wie im Stand der Technik und in Figur 4 als gestrichelte Linie dargestellt - als Radius, sondern als Spline, auch als Polynomzug bezeichnet, ausgebildet und weist damit die Form einer glatten, harmonischen, zusammengesetzten mathematischen Kurve dritten Grades auf.

Vorteilhafterweise setzt sich die Kurve dritten Grades bzw. Spline oder Polynomzug aus zwei bogenförmigen Abschnitten 4 und einer Abflachung 5 im dazwischenliegenden Bereich zusammen.

Im gezeigten Ausführungsbeispiel sind die Radien der bogenförmigen Abschnitte 4 gleich groß, sie können jedoch auch unterschiedlich groß sein.

Die zwischen den bogenförmigen Abschnitten 4 liegende Abflachung 5 weist einen Radius auf, der größer ist als der Radius der bogenförmigen Abschnitte 4.

Die Abflachung 5 kann - wie dargestellt - auch als ebene Fase ausgebildet sein, die in die bogenförmigen Abschnitte 4 übergeht.

Der Radius der bogenförmigen Abschnitte 4 liegt im niedrigen einstelligen Millimeterbereich und beträgt vorzugsweise 1,5 mm.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Schutzumfang der Ansprüche, die die Erfindung definieren, zu verlassen.

### Bezugszeichenliste

- 1: Tür
- 1a: Türscharnier
- 1b: Achse
- 1c: Drehkreis
- 2: Fahrzeugteil/andere Tür
- 3: Abkantung
- 4: bogenförmiger Abschnitt
- 5: Abflachung

## Patentansprüche

1. Abkantung (3) eines Bleches,
wobei die Abkantung in Form einer glatten, harmonischen, zusammengesetzten mathematischen Kurve dritten Grades (Spline bzw. Polynomzug) ausgeführt ist, **dadurch gekennzeichnet,**
**dass** die Abkantung (3) des Bleches im optisch relevanten Außenbereich eines Fahrzeuges im beweglichen Bereich von Türen (1, 2) oder Klappen erfolgt,
um die Trennstelle zwischen bewegten und feststehenden Teilen (1, 2) optisch schmaler wirken zu lassen.

2. Abkantung nach Anspruch 1, **dadurch gekennzeichnet, dass** sich die Kurve dritten Grades aus zwei bogenförmigen Abschnitten (4) und einer Abflachung (5) im dazwischenliegenden Bereich zusammensetzt.

3. Abkantung nach Anspruch 2, **dadurch gekennzeichnet, dass** die Radien der bogenförmigen Abschnitte (4) gleich groß sind.

4. Abkantung nach Anspruch 2, **dadurch gekennzeichnet, dass** die Radien der bogenförmigen Abschnitte (4) unterschiedlich groß sind.

5. Abkantung nach einem Ansprüche 2 oder 4, **dadurch gekennzeichnet, dass** die Abflachung (5) im dazwischenliegenden Bereich einen Radius aufweist, der größer ist als der Radius der bogenförmigen Abschnitte (4).

6. Abkantung nach einem der Ansprüche 2 bis 4, **dadurch gekennzeichnet, dass** die Abflachung (5) im dazwischenliegenden Bereich als ebene Fase ausgebildet ist.

7. Abkantung nach einem der Ansprüche 2 bis 6, **dadurch gekennzeichnet, dass** der Radius der bogenförmigen Abschnitte (4) im niedrigen einstelligen Millimeterbereich liegt und vorzugsweise 1,5 mm beträgt.

## Claims

1. A bent edge (3) of a metal sheet,
wherein the bent edge is embodied in the form of a smooth, harmonic, assembled mathematical cubic curve (spline or polynomial line), **characterised in that**
the bending (3) of the edge of the metal sheet takes place in the visually relevant outer region of a vehicle in the movable region of doors (1, 2) or gates,
in order to make the point of separation between moving and fixed parts (1, 2) appear visually narrower.

2. A bent edge according to Claim 1, **characterised in that** the cubic curve is composed of two arcuate portions (4) and a flattened portion (5) in the region therebetween.

3. A bent edge according to Claim 2, **characterised in that** the radii of the arcuate portions (4) are of the same size.

4. A bent edge according to Claim 2, **characterised in that** the radii of the arcuate portions (4) are of different sizes.

5. A bent edge according to one of Claims 2 or 4, **characterised in that** the flattened portion (5) in the region therebetween has a radius which is greater than the radius of the arcuate portions (4).

6. A bent edge according to one of Claims 2 to 4, **characterised in that** the flattened portion (5) in the region therebetween is formed as a planar chamfer.

7. A bent edge according to one of Claims 2 to 6, **characterised in that** the radius of the arcuate portions (4) lies in the low single-digit millimetre range and is preferably 1.5 mm.

## Revendications

1. Repliage (3) d'une tôle,
le repliage se présentant sous la forme d'une courbe mathématique du troisième degré, lisse, harmonique, composée, (splin, courbe polynominale),
**caractérisé en ce que**
le repliage (3) de la tôle se fait dans la zone extérieure optiquement pertinente d'un véhicule, dans la région mobile de portière (1, 2) ou de volet,
pour que la zone de jonction entre les parties mobiles et les parties fixes (1, 2) soit optiquement plus étroite.

2. Repliage selon la revendication 1,
**caractérisé en ce que**
la courbe du troisième degré se compose de deux segments d'arc (4) et d'un aplat (5) dans la zone intermédiaire.

3. Repliage selon la revendication 2,
**caractérisé en ce que**
les rayons des segments en arc (4) sont identiques.

4. Repliage selon la revendication 2,
**caractérisé en ce que**
les rayons des segments d'arc (4) sont différents.

5. Repliage selon la revendication 2 ou 4,
**caractérisé en ce que**
l'aplat (5) dans la zone intermédiaire a un rayon supérieur au rayon des segments en arc (4).

6. Repliage selon les revendications 2 à 4,
**caractérisé en ce que**
l'aplat (5) dans la zone intermédiaire a une arête plane.

7. Repliage selon l'une des revendications 2 à 6,
**caractérisé en ce que**
le rayon des segments en arc (4) se situe dans une plage millimétrique à un chiffre et de préférence elle est égale à 1,5 mm.
